# EUROPEAN PATENT APPLICATION

(11) **EP 2 034 350 A2**
(43) Date of publication of application: **11.03.2009**
(21) Application number: 08152894.5
(22) Date of filing: 18.03.2008
(51) Int. Cl.: G02B 23/10, G02B 27/32

(54) **Electronic multi-reticle-pattern scope**

(30) Priority: 04.09.2007 US 849639
(71) Applicant: Alot Enterprise Company Limited, 5 A Kung Ngam Village Road Shaukeiwan, Hong Kong (CN)
(72) Inventor: Mok, Kwok Hoo, Hong Kong (CN)
(74) Representative: Delumeau, François Guy

(57) **Abstract**

A scope (20) is disclosed as including a display to display a plurality of reticle-patterns, means (2, 3) for selecting one of the reticle-patterns to be displayed by the display, and an optical prism (7) projecting the displayed reticle-pattern onto a piece of lens viewable by a user.

## Description

This invention relates to an aiming device, e.g. a scope, in particular such a device capable of providing a plurality of reticle-patterns.

### Background of the Invention

Rifles or such like firearms are sometimes mounted with a scope for assisting a user to aim accurately at a target. Each such scope is provided with a reticle with a pattern which may be fine crosshair, duplex crosshair, German reticle, target dot, or the like.

Conventionally, in order to provide different reticle-patterns, a number of rotatable optical masks are mounted for selective positioning at the required position. However, the position of such a multi-reticle mechanism is not fixed with respect to the scope with which it is mounted, especially when strong impact is experienced after several rounds of shooting. The aiming accuracy is thus affected.

It is thus an object of the present invention to provide a scope in which the aforesaid shortcomings are mitigated, or at least to provide a useful alternative to the public.

### Summary of the Invention

According to the present invention, there is provided a scope including a display adapted to display a plurality of reticle-patterns; means for selecting one of said plurality of reticle-patterns to be displayed by said display; and optical arrangement for projecting the displayed reticle-pattern onto a piece of lens viewable by a user.

### Brief Description of the Drawings

A preferred embodiment of the present invention will now be described, by way of example only, with reference to the accompanying drawings, in which:
Fig. 1 is a schematic diagram of a scope according to a preferred embodiment of the present invention;
Fig. 2 is a block diagram of the control mechanism of the scope of Fig. 1; and
Figs. 3A to 3F show various reticle patterns which may be displayed by the scope of Fig. 1.

### Detailed Description of the Preferred Embodiment

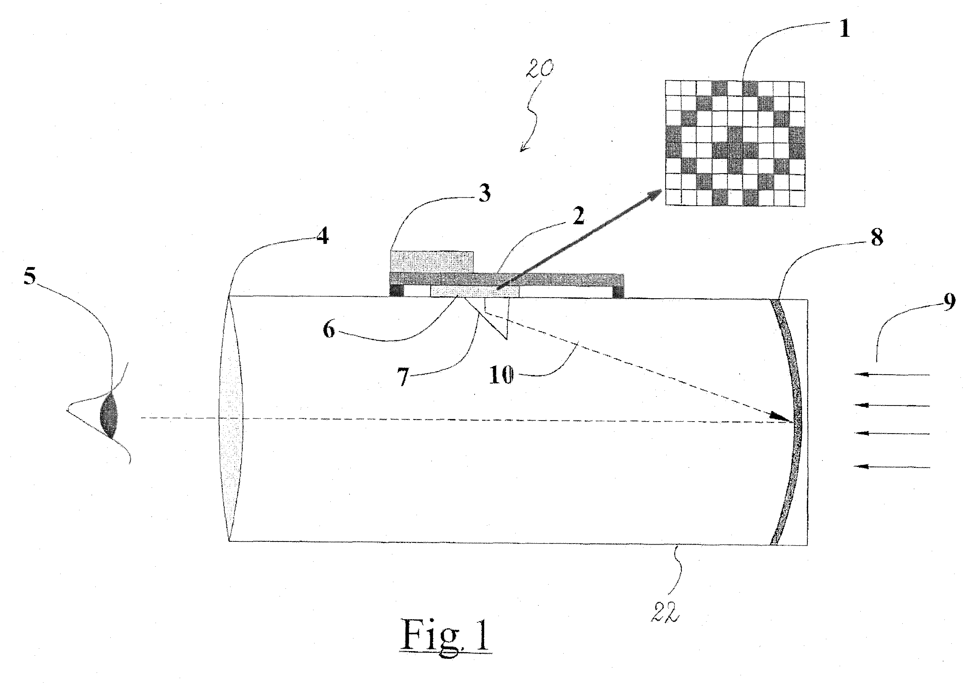

As shown in Fig. 1, a scope according to a preferred embodiment of the present invention is generally designated as 20. The scope 20 is in general shape of a cylindrical tube 22 with an ocular lens 4 and an object lens 8. Light 9 from the outside environment, e.g. from a target falls on the object lens 8, to be viewed by a user 5 through the ocular lens 4.

A display panel 6 (which may be a liquid crystal display (LCD), organic light-emitting diode (OLED) display, light-emitting diode (LED) dot matrix display, or such like light-generating display) fixed to the tube 22 may be operated to generate a number of different reticle-patterns. Light 10 generated by the display panel 6 is directed by an optical prism 7 onto the object lens 8, again to be viewed by the user 5 through the ocular lens 4. The user 5 would thus see the reticle-pattern imposed on the image of the target on the lens 8.

A printed circuit board (PCB) 2 mounted with a microcontroller (MCU) (not shown) is electrically connected with the display panel 6 for controlling the operation of the display panel 6. A selection panel 3 is also electrically connected with the MCU for controlling the operation of the MCU.

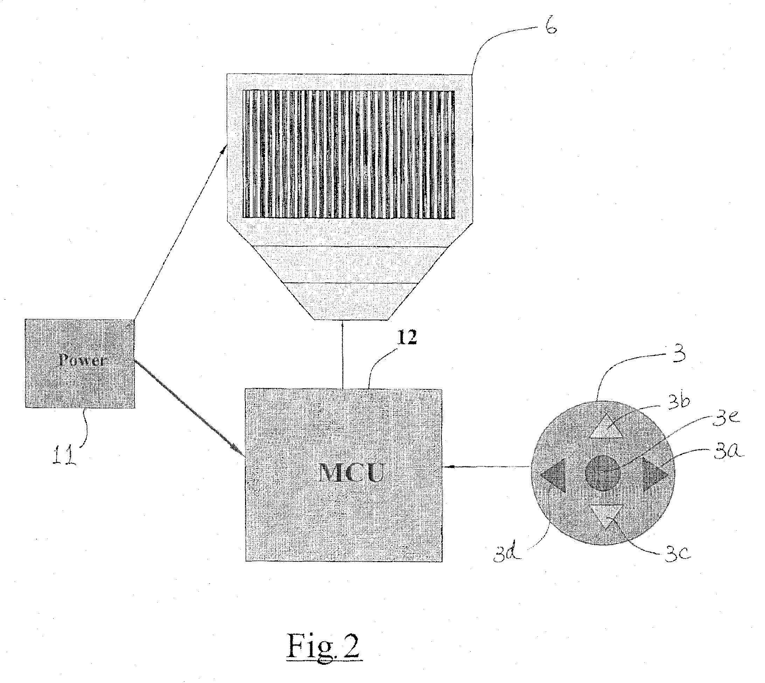

As shown in Fig. 2, the electronics arrangement of the scope 22 includes a Power 11 (which may be dry batteries) which provides electric power to the display panel 6 and the MCU 12. A user, by operating a number of buttons 3a, 3b, 3c, 3d, 3e on the selection panel 3, may activate or deactivate the multi-reticle function of the scope 22, choose the reticle-pattern to be displayed, adjust the intensity of the light generated by the display panel 6, effect rotation of the displayed reticle-pattern, or adjust the scale or size of the displayed reticle-pattern.

The MCU 12 has an electrically erasable programmable read-only memory (EEPROM) for storing the instructions for displaying plurality of reticle-patterns. Such may also be stored in a flash memory.

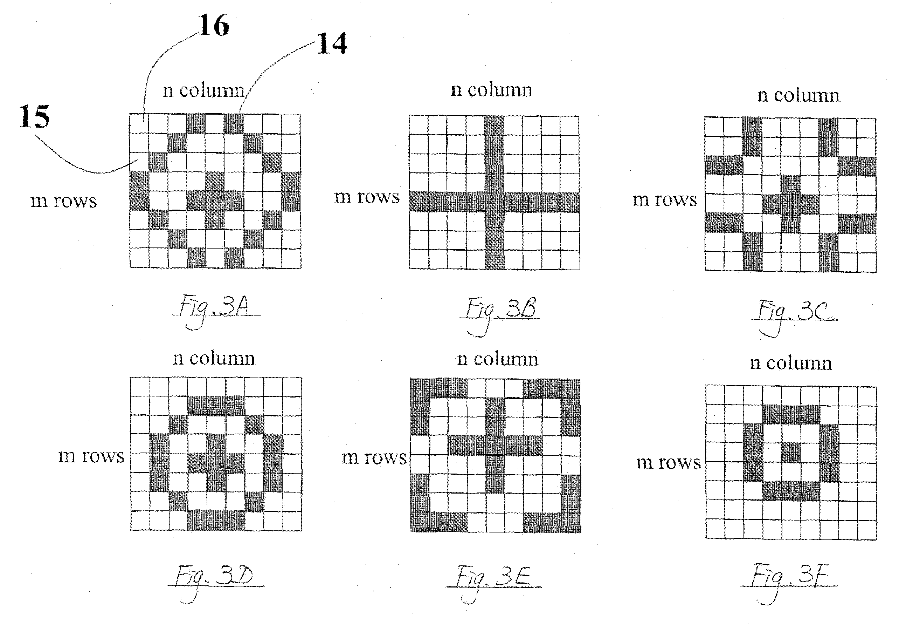

Figs. 3A to 3F show a number of different reticle-patterns which may be displayed by the scope 22. Each pattern is formed of an array of lighting elements arranged in a matrix form of *n* columns and *m* rows. The MCU 12 operates the activation or otherwise of each lighting element in each pixel of the matrix. The initial position of the column and row address (0, 0) normally locates at the top left hand corner 16 of the matrix. Using the reticle-pattern in Fig. 3A as an example, to display such a pattern, the MCU 12 activates the lighting element at 14 but deactivates the lighting element at 15.

It can be seen that, with a scope according to the present invention, as the display panel 6 is fixed to the scope 22, dislocation of the reticle-pattern relative to the scope 22 is prevented. In addition, with the use of a dot-matrix display panel, up to a hundred of different reticle-patterns can be easily produced, according to the user's preference and need, whereas in traditional mechanically-mounted multi-reticle mechanisms, it is very difficult to provide more than ten different reticle-patterns. It is also relatively easy to add in new reticle-patterns to the EEPROM or such like memory in the MCU 12.

It should be understood that the above only illustrates an example whereby the present invention may be carried out, and that various modifications and/or alterations may be made thereto without departing from the spirit of the invention.

It should also be understood that various features of the invention which are, for brevity, described here in the context of a single embodiment, may also be provided separately or in any appropriate sub-combinations.

## Claims

1. A scope (20) including :
a display (6) adapted to display a plurality of reticle-patterns;
means (2, 3) for selecting one of said plurality of reticle-patterns to be displayed by said display; and
optical arrangement (7) for projecting the displayed reticle-pattern onto a piece of lens (8) viewable by a user.

2. A scope according to Claim 1 further including memory for storing said plurality of reticle-patterns.

3. A scope according to Claim 1 wherein said display (6) is a liquid crystal display (LCD), organic light-emitting diode (OLED) display, light-emitting diode (LED) dot matrix display.

4. A scope according to Claim 1 wherein said optical arrangement includes at least an optical prism (7).

5. A scope according to Claim 1 wherein said piece of lens is an object lens (8).
